# EUROPEAN PATENT APPLICATION

(11) **EP 4 621 275 A1**
(43) Date of publication of application: **24.09.2025**
(21) Application number: 24382318.4
(22) Date of filing: 22.03.2024
(51) Int. Cl.: F16L 37/56, F28D 1/053, F28F 9/02, F28F 9/04, H01M 10/613, H01M 10/625, H01M 10/6557

(54) **CONNECTOR FOR BATTERY COOLER**

(71) Applicant: BORGWARNER EMISSIONS SYSTEMS SPAIN, S.L.U., 36315 Vigo Pontevedra (ES)
(72) Inventor: HERMIDA, Xoan, E-36380 Gondomar (ES); LOZANO, Francisco, E-36400 O Porriño (ES); DÍAZ BÓVEDA, Clara, E-36208 Vigo (ES); LORENZO GONZÁLEZ, Manuel, E-36413 Mosende, O Porriño (ES); LAREU, Gerardo, E-36211 Vigo, Pontevedra (ES); RÁEZ, Alberto, E-36204 Vigo (ES)
(74) Representative: ABG Intellectual Property Law, S.L.

(57) **Abstract**

The present invention relates to a fluidic connector suitable for a heat exchange tube for battery cells, and more specifically, configured for a heat exchange tube for battery cells. According to the prior art, the heat exchange tubes are tubes having a flat configuration, typically corrugated, which conform to the sides of the battery cells and fed at one end. In contrast, the invention is characterized by a specific two-part configuration and leaves the flat tube interposed, said configuration allowing the entry and exit of the liquid coolant from either the side faces of the flat tube, and particularly from a direction with access from the upper portion of the battery pack, or else from the lower portion or in a combined manner.

The configuration of the connector even allows the liquid coolant to be fed through intermediate points along the extension of the cooling tube.

## Description

### OBJECT OF THE INVENTION

The present invention relates to a fluidic connector suitable for a heat exchange tube for battery cells, and more specifically, configured for a heat exchange tube for battery cells.

The fluidic device is part of a heat exchange system based on the transfer of heat through a liquid coolant, which can be intended for removing heat from the battery cells to prevent their overheating or for providing heat and preventing the cells from dropping below a specific operation temperature when they need to be heated.

According to the prior art, heat exchange tubes are tubes having a flat configuration, typically corrugated, which conform to the sides of the battery cells and fed at one end. In contrast, the invention is characterized by a specific two-part configuration and leaves the flat tube interposed, said configuration allowing the input and output of the liquid coolant from either the side faces of the flat tube, and particularly from a direction with access from the upper portion of the battery pack, or else from the lower portion or in a combined manner.

The configuration of the connector even allows the liquid coolant to be fed through intermediate points along the extension of the cooling tube.

### BACKGROUND OF THE INVENTION

One of the most intensively developed fields of the art is that of batteries and, more specifically, vehicle batteries.

One of the greatest challenges in an electric vehicle is to have batteries that provide sufficient autonomy for the vehicle with the lowest possible weight and smallest possible volume. Achieving the highest degree of cell packing also imposes high requirements for cooling or heating the battery cells as needed.

When the heat exchange requirements are high, the highest heat transfer is achieved for example by making use of liquid coolants capable of transferring large amounts of heat. To do this, the liquid coolant must be fed into the heat exchange tubes and, once it has passed through the heat exchange tube, must be discharged. This generates an intake and another return liquid coolant flow.

When it is intended to cool the cell pack, the day liquid coolant flow is a relatively cold fluid and the return flow has a higher temperature after having removed heat from the cells that are in contact with the heat exchange tube. When the battery pack is heated it is the other way around, the liquid coolant has a higher temperature than the cells that are heated by cooling the liquid coolant. Therefore, the temperature of the return flow in this case is lower than the temperature of the intake flow.

There are several configurations of heat exchange tubes.

With respect to the structure of the tube, according to its section, the most common is flat and formed by a plurality of internal channels that allow guiding the flow along the entire section. This internal structure of the tube allows any point of the tube to be equally effective as other points of the flat tube, mainly with respect to the transverse direction contained in the main plane of the tube.

The flat configuration is also best suited to the lateral surface of the cell, typically cylindrical, and hence the corrugated configuration is widely used so that each corrugation has a larger area in contact with the cell.

Other configurations of interest place the flat tube in the lower portion of the battery, as a lower bed, cooling the base of the cells. This configuration is also used when the cells are prismatic and the flat tube is in contact with one of the faces of the cells that are oriented lying down according to the direction of gravitational action.

With respect to the flow through the tube, according to an example configuration, the entire tube may be transfering liquid coolant in one direction. In this configuration a first end of the tube serves for feeding the liquid coolant and the return flow is collected at the opposite end.

In this configuration the tube has a feed manifold at one end and a receiving manifold for the return flow at the opposite end. When a plurality of tubes are used, said tubes are arranged essentially parallel leaving the cells interposed therebetween. Furthermore, the tubes are oriented in such a way that the feed manifolds are on the same side, communicated with one another, and the manifolds receiving the return flow are located on the opposite side, also communicated with one another.

The feed manifolds connected to one another are fed through a flow inlet port and, the outlet manifolds collecting the return flow are connected to one another and carry the flow to an outlet port. The inlet port and the outlet port are distant from one another.

A second configuration in which the manifolds feeding the intake flow and the manifolds feeding the return flow are at the same end of the tubes is also known. In this case, the flow inside the tube follows a U-shaped configuration.

One way to achieve this U-shaped configuration is based on establishing a first group of channels inside the intake heat exchange tube and a second group of return channels for the return flow. At the end of the tube opposite to where the intake and return manifolds are located, there is a manifold the main function of which is to communicate the intake and return channels with one another in order to change the intake flow direction by feeding the channels for the return flow.

Some configurations in which the tubes are fed at an intermediate point using welded metal manifolds are known.

The present invention proposes a connector solution that overcomes these limitations and has a configuration that requires very few manufacturing operations and allows for being manufactured in dielectric materials, preventing the propagation of electric discharges.

### DESCRIPTION OF THE INVENTION

A first aspect of the invention relates to a fluidic connector suitable for a heat exchange tube for battery cells, and more specifically adapted for said tube.

Particularly, the tube for which the connector is suitable, and more specifically the tube for which the connector is configured, comprises the following features:
- The tube is adapted for transfering a thermal fluid and configured to exchange heat with one or more battery cells.
- The tube has a flattened configuration, limited essentially between two parallel faces, in at least one segment extending essentially in a plane and along a longitudinal direction and a transverse direction.
- The tube comprises one or more longitudinal channels for an intake flow on one of the sides thereof and one or more longitudinal channels for a return flow on the opposite side according to the transverse direction.
- Optionally, the tube comprises at least one manifold in fluid communication with the channels in the intake flow, with the channels in the return flow, or with both channels.

The flat configuration of the tube allows defining a plane that will be identified with the letter "P", and it is the plane in which it mainly extends both longitudinally and transversely. The longitudinal direction will be identified as X-X' and the transverse direction of the tube will be identified as Y-Y'. A third dimension is the one that allows identifying the thickness of the tube.

The tube can have a corrugated configuration which can give rise to these corrugations being on both sides of the reference plane P.

Likewise, it has been indicated that the tube has two groups of channels, at least one inflow channel and at least one return channel, where one group is on one side of the tube according to the transverse direction Y-Y', and the other group is on the other side. According to embodiments, the first group of channels is adjacent to the second group of channels whereas, according to other embodiments they are spaced apart through an intermediate segment, causing the exchange tube to be wider, that is, in consideration of the transverse direction Y-Y'.

These two groups of channels will be used to have an intake flow through the first group of internal channels, and a return flow through the second group of channels. This is achieved by using a manifold at one end which allows the change in direction communicating the intake channels with the return channels.

If the feeding of the heat exchange tube takes place at an intermediate point, then the intake flow is divided into two intake flows extending towards both ends of the exchange tube, and after changing direction, the two flows return as return flows through the remaining return channels converging at the intermediate point or in the proximity thereof.

The first aspect of the invention, as indicated above, relates to a connector suitable for the described tube which allows feeding same with liquid coolant as the intake flow, and removing the liquid coolant which corresponds to the return flow.

*The fluidic connector comprises a first part and a second part configured to, in the operating mode, leave at least part of the segment of the tube having a flattened configuration interposed, wherein:*
- *the first part and the second part comprise a first fluidic connection, the first fluidic connection of the first part for the intake flow and the first fluidic connection of the second part for the return flow;*
- *the first part and the second part comprise a second fluidic connection adapted for being in communication with the channels of the tube, the second fluidic connection of the first part adapted for connecting with the channels for the intake flow of the tube and the second fluidic connection of the second part adapted for connecting with the channels for the return flow of the tube,*
*wherein the first fluidic connection of the first part is in fluid communication with its second fluidic connection, and the first fluidic connection of the second part is in fluid communication with its second fluidic connection.*

That is, one part is in charge of introducing the intake flow into the exchange tube, being located on one of the sides of the flat tube (and also on one side of the plane P), and the other part is in charge of removing the return flow from the same tube being located on the opposite side both of the tube and of the reference plane P. The two parts will be distinguished as first part and second part, respectively.

The connection with the tube can be direct or indirect. The direct connection establishes a coupling between each part with the tube directly, and the indirect connection uses at least one manifold. In this second case, the first part and the second part are located on both sides of the at least one manifold which is what feeds the tube.

Where "at least one manifold" is indicated, it is because it is either a manifold with two chambers, distinguishing the access to the intake channels and to the return channels, or it is a manifold with two bodies, one body to serve as a manifold for the intake channels and another body to serve as a manifold for the return channels.

The pack formed by the flat tubes and the plurality of cells mainly forms a plane where the transverse direction Y-Y' is perpendicular to said plane. This plane of the cell pack and exchange tubes will be identified as plane P2.

Each part has the so-called first fluidic connection. It is the connection which allows the intake flow and the return flow to access the tube following a path which, in the cases of greater interest, is not contained in the plane P2 of the cell pack.

The fluidic connection can be, for example, a seat for a spigot, and may be embodied in a tubular segment which allows, for example, the connection with a flexible tube or in an access neck to a fluidic port.

Throughout the text, both the first fluidic connection and the second fluidic connection are connection interfaces. In a specific case of interest, the fluidic connection is a support seat on a region with which fluid is transferred, in another specific case of interest the fluidic connection is an interface on which there is attached a spigot or a connection fitting which allow maintaining conduction. In these second cases, the interface is a surface defined by the generally circular section.

By default, the direction of the interface will be the direction perpendicular to the surface constituting said interface. What is most common in operating conditions is for the flow to go through the interface according to the direction of the fluidic connection.

According to an embodiment, *the first fluidic connection of the first part, the first fluidic connection of the second part, or both first fluidic connections have an orientation that is not spaced from the plane (P) by more than 20°, and more preferably is not spaced from the plane (P) by more than 15°, is not spaced from the plane (P) by more than 10°, is not spaced from the plane (P) by more than 5°, is not spaced from the plane (P) by more than 3°, and more preferably is contained in the plane (P).*

That is, particularly, the direction of the first fluidic connection is not perpendicular to the plane P of the tube, and more specifically in a preferred case it is contained in said plane P of the tube although it could show a bounded inclination with respect to said plane P, and its orientation can be according to any angle with respect to the longitudinal direction.

A preferred direction of the first fluidic connection is the direction perpendicular to the longitudinal direction X-X' and contained in the plane P of the flat tube.

In the operating mode, the first part receives the liquid coolant in the first fluidic connection and directs it towards a second fluidic connection feeding the intake channels of the tube, for example, through a manifold if there is one. The second part receives the return flow arriving through the return channels, either directly or else through the manifold if there is one, and directs the flow in turn to its first fluidic connection.

That is, according to an embodiment applicable to any of the described configurations, *the first fluidic connection of the first part, of the second part, or of both is in fluid communication with the second fluidic connection through an internal chamber.*

An intermediate space located between the surface determining the interface of the first fluidic connection and the surface determining the interface of the second fluidic connection will be interpreted as an internal chamber.

According to a preferred example, the intermediate chamber is a region which allows changes in direction of the flow, minimizing pressure drops. According to another embodiment, the space of the intermediate chamber is a region having a larger section than the one defined by the interface of the first fluidic connection or the second fluidic connection.

According to this embodiment, this fluid communication between the first fluidic connection and the second fluidic connection is carried out through an internal chamber which allows adapting the distances for the second fluidic connection to reach the corresponding channels depending on whether it is the first part or the second part. Given that the intake channels are on one side of the tube with respect to the transverse direction Y-Y', the return channels are on the opposite side with respect to this same transverse direction Y-Y', so the first part and the second part place the second connection at different distances from the first connection.

According to the first aspect of the invention, the second fluidic connections are connected to the channels of the tube either directly with a coupling through the side wall of the tube or else through a manifold which is what distributes the flow to the different channels when the flow is an intake flow or collects the flow of the return channels to this second fluidic connection.

According to an embodiment applicable to what is described, *the first part and the second part comprise a support seat adapted for, in the operating mode, being supported either on one of the faces of the tube or else on the manifold of the tube, the seat of the first part being adapted for being supported on one of the faces of either the tube or else the manifold, and the seat of the second part being adapted for being supported on the opposite face of either the tube or else the manifold.*

According to this specific example, each part has a seat which is supported either on the tube or else on the manifold, if there is one. This seat ensures the structural stability which is combined with fixing means. The support other than that which can already be offered by the second fluidic connection increases the structural stability of the fluidic connection and can also be the means where the stresses that appear when there are attachment means between any of the parts and the tube or the manifold, if there is one, are counteracted.

According to an embodiment applicable to any of the examples described above, *the first part and the second part comprise fixing means for mutual attachment.*

According to this embodiment, the fixing of the parts includes a mutual fixing, that is, given that the first part and the second part are on both sides of the flat tube, the parts leave the tube interposed and by being mutually fixed they improve the attachment of each part with the tube since the fixing favors any tensile stress that helps the second connection to be pressed against the tube.

According to an embodiment applicable to the preceding example, *the fixing means for mutual attachment comprise clipping means.*

The clipped attachment is a quick and potentially reversible attachment. The attachment of the parts is achieved by simply exerting force in the first part against the second part, one against the other, and once the attachment is established it is maintained unless means for uncoupling the clipping when it is reversible are used. This quick attachment ensures a quick assembly which allows the second connection of each part with the tube to be ensured in an action with minimal anchoring movement.

According to an embodiment applicable to any of the described examples, *the fixing means for mutual attachment comprise screwed attachment means.*

The screwed attachment is stronger than the clipped attachment. This attachment can be alone or in combination with the clipped attachment. If the parts are already attached by clipping, the screwed attachment ensures high stresses and exerting greater pressure on the second fluidic connection either with the tube or else with the manifold if there is one. The preferred fluidic attachments use sealing elements such as O-rings or elastomeric elements which, when compressed, ensure fluid-tightness. The screwed attachment ensures the stresses required for this compression.

If the parts are already attached by clipping, the positioning of the screw is also easier.

According to embodiments, the tube has an intermediate portion separating the channels for the intake flow and the channels for the return flow. The screw is preferably located in the intermediate portion. When there is no intermediate portion in the tube, a preferred position of the screw is a centered position with respect to the transverse direction Y-Y'.

Other positions of the screw or screws is such that the tube is not traversed when connecting the first part and the second part. This position, for example, can be spaced from the side edges of the flat tube.

Other alternatives are to be through screws going through the tube in areas where there are no channels intended for conducting liquid coolant.

According to an embodiment applicable to any of the described examples, *the first part, the second part, or both comprise a spigot in the first fluidic connection, either fixed to the first fluidic connection or as a prolongation of the first fluidic connection forming a single body with the part.*

It has been described that the first fluidic connection has a defined inlet or outlet direction which corresponds to the perpendicular direction of the interface surface that defines said fluidic connection or the direction that the fluid adopts in the operative form. For example, when the first fluidic connection is an opening on a flat surface and the fluid comes from a conduit perpendicular to the surface where the opening is located, then it is considered that the direction of the fluidic connection is the direction of the conduit, that is, also perpendicular to the surface on which the opening is located.

The spigot is a tubular prolongation or neck which allows connecting, for example, flexible fittings. These spigots can be independent parts fixed, for example, to first fluidic connection by means of threading, welding, gluing, or, as an alternative, it can be an integral part, forming a single part, with the rest of the body of the first or second part. The term fixed is considered synonymous to attached as a final structural state, and therefore the use of the term fixed is not limited to the fact that there must necessarily be a prior action of fixing.

According to an embodiment applicable to any of the described examples, the *orientation of the first fluidic connection is according to a transverse direction Y-Y' with respect to the longitudinal direction X-X', wherein the first fluidic connections of the first part and of the second part have either the same sense of orientation or the opposite sense of orientation.*

The assembly formed by the cells and the tubes extend in two directions, with one direction being the longitudinal direction X-X' of the tube, and since the tubes are arranged interposed between cells, this stack extends perpendicular to the tube. Therefore, the transverse direction Y-Y' of the tube is perpendicular to the plane defined by these two directions, previously identified as plane P2, in which the cell pack and tubes extend.

According to this embodiment, the arrangement of the fluidic connections is such that the outlet is perpendicular to the main plane defined by the cell pack and tubes, so it allows easily feeding liquid coolant to the tubes from accesses outside the cell pack without necessarily having to be on the edges of said cell pack and tubes. As indicated, the feeding of the liquid coolant requires two access ports, one for introducing the liquid coolant and another one for receiving the return flow of the liquid coolant. Both can have the access from the same side of the plane defined by the cell pack and tubes, or they can be on opposite sides of said plane, as appropriate, in the final configuration of the battery.

According to an embodiment applicable to any of the described examples, the embodiment is a heat exchange device for battery cells comprising:
- *a heat exchange tube which:*
   *is adapted for transfering a thermal fluid and configured to exchange heat with one or more battery cells,*
   *has a flattened configuration, limited essentially between two parallel faces, in at least one segment extending essentially in a plane P and along a longitudinal direction X-X' and a transverse direction Y-Y', and*
   *comprises one or more longitudinal channels for an intake flow on one of the sides thereof and one or more longitudinal channels for a return flow on the opposite side according to the transverse direction Y-Y'; and*
- *a fluidic connector according to any of the preceding claims wherein:*
   *the tube is interposed between the first part and the second part;*
   *the second fluidic connection of the first part is in fluid communication with the channels of the tube intended for the intakeflow, and the second fluidic connection of the second part is in fluid communication with the channels of the tube intended for the return flow.*

In this embodiment, the combination of the flat tube and the fluidic connector formed by the first part and the second part according to any of the described examples determines a heat exchange device adapted for exchanging heat with one or more battery cells.

The flat configuration of the tubes allows establishing a stack, by alternating tubes and cells, in the direction perpendicular to the surfaces having the largest area of the tube, those which determine the flat configuration. That is, the tube extends according to a longitudinal direction X-X' conforming to the walls of a plurality of cells, for example, adopting a corrugated configuration according to this same longitudinal direction X-X' if the cells are cylindrical; and also according to a transverse direction Y-Y' to cover most of the height of each cell. With this configuration, the greatest possible contact between the tube and each cell is maximized.

The simplest example of a flat tube is when the tube has no fluctuations in shape with respect to the reference plane defined by the longitudinal direction X-X' and transverse direction Y-Y'. In this case, the contact with prismatic batteries having parallel faces is between two flat surfaces through which heat is exchanged.

The example of the cells being cylindrical is also introduced to clarify that the tube can extend according to the longitudinal direction X-X' with fluctuations in shape around this same longitudinal direction X-X' such as those configured in a corrugated manner to be adapted to the cylindrical shape of the cells.

Other examples that would likewise be valid are those where the cells are prismatic with the faces not necessarily in the form of a prism with a rectangular base but rather a polyhedral base, for example, with a number of side faces exceeding four, and the tube has flat segments that are adapted for the closest possible contact with the shape of the cell.

In this case, the flat tube also shows fluctuations in shape, for example, with a periodic path behavior, and continues to extend according to the longitudinal direction X-X'. According to this example, the corrugated shape could be, in a specific case according to one path, formed by straight segments. An example of a corrugated shape formed by straight segments is a configuration formed by straight segments where the ends of each straight line are arranged according to a wavy path such as a sinusoidal path. This configuration is particularly suitable when the cells, instead of being cylindrical, are prismatic such that each straight segment is coplanar with one of the surfaces of the prism. The path of the tube generically shows, in segments, a complementary or antagonistic configuration of the outer surface of the cell to maintain the largest possible contact area.

Other examples in which the flat configuration of the tubes is advantageous and allows the combination of flat tube and connector is when the tube is arranged with a horizontal orientation at the base of the cell, or when the cells are rotated such that their side faces are supported on said base where the also horizontal flat tube is located.

The stack can be by alternating tube and plurality of aligned cells or more than one cell alignment. In any case, the stack extends in the direction perpendicular to the longitudinal direction X-X' and the transverse direction Y-Y'. This third direction and the longitudinal direction X-X' are the two directions that define the main plane P2 of the cell pack and tubes and are the main element that configures a battery. Typically, when operatively installed in a vehicle, the main plane P2 of the cell pack and heat exchange tubes is oriented horizontally according to the action of gravity.

Particularly, the configuration of tube and connectors according to this embodiment is suitable for establishing a battery cell pack which extends forming a pack having a flat configuration, as indicated, extended according to a main plane P2, where there are intercalated a plurality of tubes which, as a result of the configuration of the fluidic connectors, allow the entry and exit of liquid coolant following a direction that is not parallel to this main plane P2 of the cell pack and tubes.

Furthermore, this access allows avoiding the use of the sides of the cell pack as a place for feeding and removing the return flow, so the battery is more compact and can be installed in conditions which, up until now, was not possible.

According to an embodiment of a device applicable to the example described above, *the first part and the second part are attached to one another.*

Typically, battery cases or other structural elements are those which establish fixing means for one or more elements of a device formed by several parts. In a configuration in which tubes and cells are packed by stacking, the final dimensions of the pack are not ensured and depend on tolerances of each of the elements of the pack, pressure stresses between same during assembly, etc., and as a result, the accumulation of all these variables which are subject to such dimensional variations gives rise to final sizes which may differ in one and the same assembly process. If any of the parts, for example, the first and second parts, have a structural element of the battery as the only fixing reference, the global position thereof is not ensured and would give rise to serious design and subsequent assembly problems.

The solution of attaching the first part and the second part to one another establishes a secure attachment with the tube given that said tube is interposed, and the mutual attachment allows, for example, exerting forces on the sealing elements between the parts and the tube or the manifold without such forces propagating outside the solution of the fluidic connection with the tube.

According to an embodiment of the device applicable to any of the two examples described above, *the tube comprises a manifold with two distribution chambers, a first distribution chamber for the intake flow and a second distribution chamber for the return flow, both fluidically separated from one another:*
- *a first chamber configured to be in fluid communication with the one or more intake channels, and*
- *a second chamber configured to be in fluid communication with the one or more return channels;*
*wherein the second fluidic connection of the first part is in communication with the first distribution chamber and the second fluidic connection of the second part is in communication with the second distribution chamber.*

The examples described above mention the possibility of the first part and the second part being connected through their second fluidic connection with the corresponding channels of the tube, but through a manifold interposed between the parts, i.e., the first and the second part, and the tube. That is, while the first part and the second part leave the flat tube interposed once they are fixed, the presence of the manifold also between both must be interpreted to mean that the tube, prolonged by means of the manifold, continues to verify that it is located between the first part and the second part.

In this embodiment in which there is a manifold, either the manifold is an additional element coupled to the tube or else the manifold is integrated with the tube forming a single body.

In this way, the manifold is interposed between the portion of the tube comprising the intake and return channels and the fluidic connector formed by the first part and the second part. In this case, according to this configuration, the manifold has two chambers not fluidically connected to one another. One of the chambers has the function of receiving liquid coolant coming from the first part through the second fluidic connection and distributing it to the intake channel or channels of the tube. The other chamber has the function of receiving liquid coolant coming from the return channel or channels of the tube, and transferring it to the second part by introducing the liquid coolant through the second fluidic connection thereof.

In a preferred embodiment, the manifold is interposed between the first part and the second part.

According to an embodiment of the device applicable to any of the three examples described above, *the connector is located at an intermediate point of the tube according* to *its longitudinal direction, such that the tube extends on both sides of the connector in respective segments, with both segments of the tube being in fluid connection with the connector.*

The most common configurations of cooling tubes for battery cells are installed on one side of the pack formed by the combination of cooling tubes and cells, that is, on one side according to the main plane P2 of this pack.

The fluidic connector of the first aspect of the invention does not impose this position at one end of the tube but rather it can be located in an intermediate position, both due to the configuration it has which allows for the intermediate coupling and due to the possibility it offers of feeding and removing liquid coolant in an incident, perpendicular or inclined direction, on the main plane P2 forming the cooling cell and tubes.

According to this configuration, the fluidic connector leaves two branches of the tube, one on each side of the connector. Each of these branches has a U-shaped flow, that is, it has an intake flow and another return flow that are communicated with one another at the end. The entry point of the intake flow for each branch is common and, similarly, the return liquid coolant outlet point is also common for each branch.

When the device has a manifold, each chamber of the manifold is in fluid communication with the intake channels of both branches of the tube, a chamber with the intake channels of both branches, and the other chamber with the return channels of both branches.

According to an embodiment of the device applicable to any of the three examples described above, *the first part and the second part are made of a dielectric material, preferably plastic.*

The use of a dielectric material, and more specifically plastic, allows not needing safety coverings in an environment where the potentials can be very high and propagate through the hydraulic circuit. Furthermore, being manufactured in plastic allows for a cost-effective manufacture and in which each of the parts can be manufactured in a single molding operation.

### DESCRIPTION OF THE DRAWINGS

These and other features and advantages of the invention will become more apparent from the following detailed description of a preferred embodiment, given solely by way of illustrative and non-limiting example, in reference to the attached figures.
Figure 1 shows a perspective view of an embodiment of a heat exchange tube for heat exchange with battery cells, and an embodiment of the connector coupled to the tube.
Figure 2 is an enlargement in detail of the previous figure mainly showing the attached connector coupled to the tube.
Figure 3 shows a perspective view of the two parts which allow the coupling to the tube, according to the same embodiment, with the tube having been eliminated to allow for better visual access.
Figure 4 shows a perspective view of the two parts of the previous figure without the clipped fixing and spaced from one another.
Figure 5 shows an elevational view of one of the parts coupled to the heat exchange tube.
Figure 6 is an exploded perspective view of the two parts according to the same embodiment in which the view allows separately visualizing each of the parts, the first part and the second part, as well as the internal elements which allow the fluid-tight connection with the heat exchange tube.
Figures 7 and 8 are perspective views of the first part and the second part, respectively, in which the perspective view allows observing the inside of each of the parts.
Figures 9, 10, and 11 show perspective views of one of the parts coupled to the tube at the rear portion. The three figures are a sequence in which, initially, according to Figure 9, a manifold for connection with the tube is observed; then, a branch of the heat exchange tube is removed to allow observing the inlet or outlet of the manifold, according to Figure 10; and one of the sheets configuring the manifold is removed to also allow observing the inside thereof according to Figure 11.
Figure 12 is a perspective view of the two connection parts coupled to the tube and with a point of view which allows observing the inflow and outflow fluidic connections.
Figure 13 is a second embodiment which is shown schematically according to a section of the tube.
Figure 14 is a third embodiment which is also shown schematically and according to a section of the tube.

### DETAILED DESCRIPTION OF THE INVENTION

According to the first inventive aspect, the present invention relates to a fluidic connector (D) suitable for a heat exchange tube for battery cells, and according to the embodiment described with the support of the figures, it is adapted for this same application.

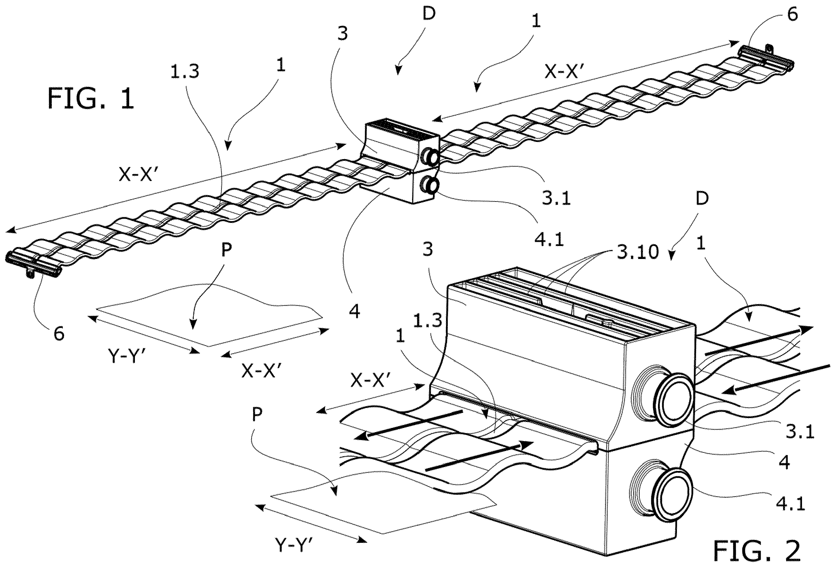

Figure 1 shows a perspective view of an embodiment of the invention where the figure shows a heat exchange tube (1) adapted for conforming to a plurality of cylindrical cells, not shown in the figure for the sake of clarity, such that the corrugated surface is adapted to the surface of each of said cells, maximizing the contact area.

The tube (1) comprises a first channel bundle (1.1) for the intake flow having a flat configuration and located on one side, and a second channel bundle (1.2) for the return flow, also having a flat configuration and located on the other side of the tube (1). Between the first channel bundle (1.1) and the second channel bundle (1.2) there is an intermediate portion (1.3) that keeps them separated, and according to this embodiment, it is configured according to a strip which also shows the corrugated configuration. When it is indicated in this embodiment that the channel bundle has a flat configuration it is because the channels are distributed one after the other, giving rise, in section, to an alignment of channels, with this distribution being independent of the configuration of the section of each channel.

Also as a whole, the tube (1) according to this embodiment has a flat configuration due to the alignment of the two channel bundles (1.1, 1.2) and the also alignment with the section of the intermediate portion (1.3); and it is also corrugated, where the direction in which the tube (1) extends will be identified as the longitudinal direction and as direction X-X'. The transverse direction but contained in the flat surface of the tube (1) will thereby be identified as the transverse direction and as Y-Y'.

The longitudinal direction (X-X') and the transverse direction (Y-Y') define a plane identified with the letter "P". These references do not have a point of origin but rather only indicate directions and orientations so they can be located at any point in space.

The tube (1) which is shown in Figure 1 comprises a fluidic connector (D) in an intermediate area according to the longitudinal direction (X-X'), particularly in the central area, such that the tube (1) extends on both sides by means of two branches. Each of the branches of the tube (1) ends in a final manifold (6) that has the function of placing the first channel bundle (1.1) for the intake flow in fluid communication with the second channel bundle (1.2) for the return flow, such that the intake flow changes the direction of travel 180º and continues on a return path as return flow. This change in direction of the flow allows the tube to be identified as a tube with a U-shaped flow.

Although the fluidic connector (D) can be located at one end of the tube (1), this embodiment shows the connection at an intermediate point since one of its advantages is allowing this intermediate position.

The fluidic connector (D) comprises two parts, a first part (3) and a second part (4), such that each part is located on both sides of the tube (1), both sides being understood in this case as on both main faces of the tube (1) having a flat configuration.

The first part (3) comprises a spigot (3.1) which allows feeding heat exchange fluid to the tube (1). This first part feeds the first channel bundle (1.1) such that the flow injected in this first channel bundle (1.1) moves away from the fluidic connector (D) in both branches of the tube (1). This direction of travel away from the fluidic manifold (D) is shown in Figures 1 and 2 by means of thick arrows.

When the flow of the heat exchange fluid reaches the final manifold (6), it returns through the second channel bundle (1.2) until reaching the second part (4) and exiting same through its spigot (4.1) as a return flow which is removed by means of conduits intended for this purpose, not shown for the sake of clarity in the figures.

The direction of the spigots (3.1, 4.1) in this embodiment is the transverse direction (Y-Y'), and they furthermore come out on the same side of the tube (1), side being understood in this case as the sides in the form of a thin edge of the tube (1) according to the transverse direction (Y-Y'). In a battery cell pack fed by a plurality of tubes (1) with this configuration, it is possible to feed the entire pack through the central area with external conduits reaching the plane in which said pack extends perpendicularly.

According to the invention, it would be possible according to another embodiment for the orientation of one of or the two spigots (3.1, 4.1) to be contained in the plane P and show a certain inclination according to the longitudinal direction (X-X') facilitating the entry of conduits for feeding and removing the flow of the liquid coolant without it having to be perpendicular, achieving a more compact assembly.

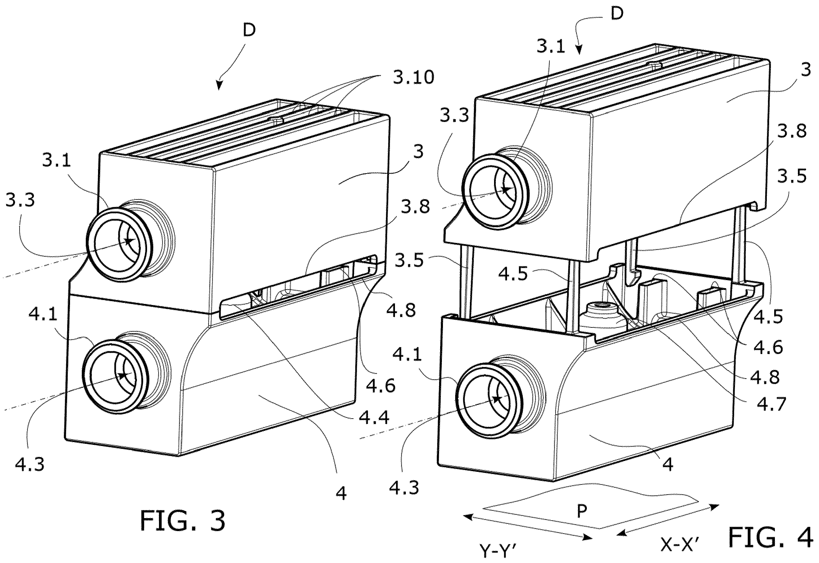

Figures 3 and 4 correspond to the same view as Figure 2, except that the tube (1) has been eliminated for greater visual access to the first part (3) and to the second part (4).

The first part (3) and the second part (4) are configured for one to be fixed to the other (4), leaving the heat exchange tube (1) interposed between both.

In this embodiment, the attachment between the first part (3) and the second part (4) uses two attachment means, a clipped attachment (3.5, 4.5) and a screwed attachment through a single central screw (5).

According to this embodiment, the clipped attachment uses two elements in the form of clipping pins (3.5) in the first part (3) and two clipping pins (4.5) in the second part (4) such that when attached, they are anchored in the opposite part (4, 3). The clipping pins (3.5, 4.5) are separated or, as shown in this embodiment, they are notches (3.8, 4.8) which, together, are each part of an opening having a configuration complementary to the section of the tube (1) such that they allow the passage of said tube (1) between same. That is, the clipping pins (3.5, 4.5) are located on both sides of the tube (1), on both sides being understood in this case according to the transverse direction (Y-Y').

In contrast, the screw (5) enters an open housing (4.7) in one of the parts, in this embodiment in the second part (4), and goes through all the components located in the central area to reach the first part (3). It reaches the first part (3) by entering a threaded hole (3.7) that strongly secures the attachment between the first part (3) and the second part (4).

According to this specific example, the screw (5) goes through at least the intermediate portion (1.3) of the tube (1), and the central area of a manifold (2) that will be described below.

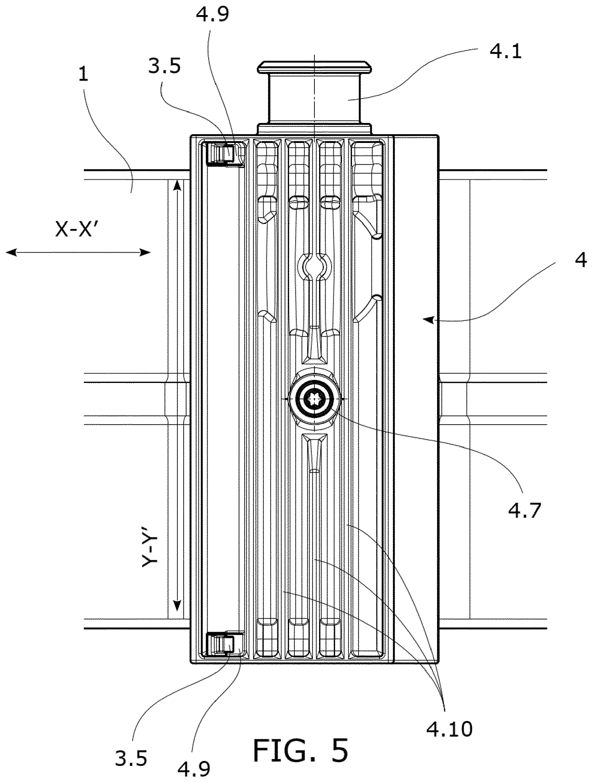

Figure 5 shows an elevational view of the second part (4), which allows observing slots (4.9) configured to receive the clipping pins (3.5) of the first part (3) and for said pins to be secured. This same solution is reproduced with the first part (3) and a slot (4.9) of the second part (4).

This same view allows observing the transverse direction (Y-Y') in which the spigot (4.1) of the second part (4) emerges to continue with a fluidic connection not shown in this figure.

This rear portion of the second part (4) is shown reinforced with ribs (4.10) which also extend according to the transverse direction (Y-Y'), so the clipping stresses located at the ends are more effectively transferred to the central area. The first part (3) likewise shows reinforcing ribs (3.10) extending in the transverse direction (Y-Y').

However, the housing (4.7) of the through screw (5) screwed into the first part (3), increasing the robustness, can be observed in the central area of this second part (4). In this case, the vertical reinforcing ribs (3.10, 4.10) also help to transmit the stresses of the screw (5), that is, they help any of the fixing elements so that the first part (3) and the second part (4) are able to exert a force against the tube (1).

This force against the tube (1) is what allows establishing the fluid-tightness between each of the parts, the first part (3) and the second part (4), with the connection means of the tube (1), mainly with the intermediation of sealing gaskets.

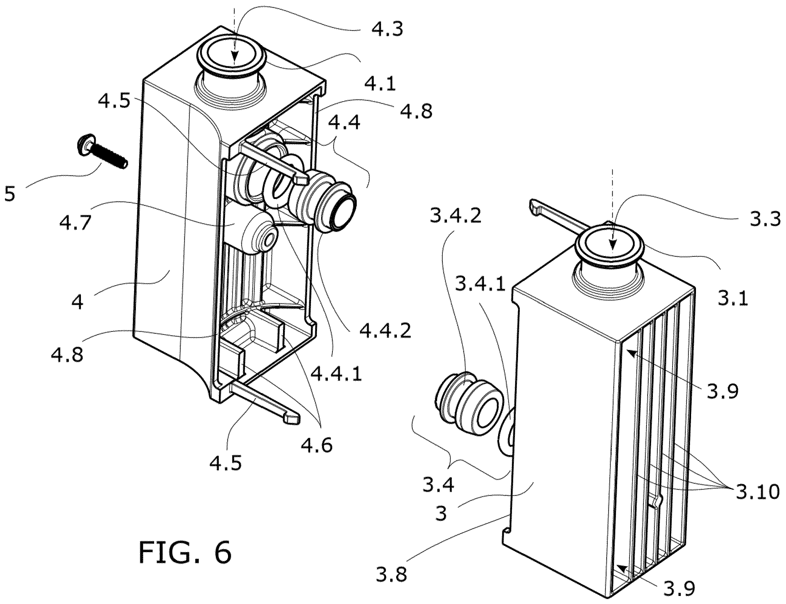

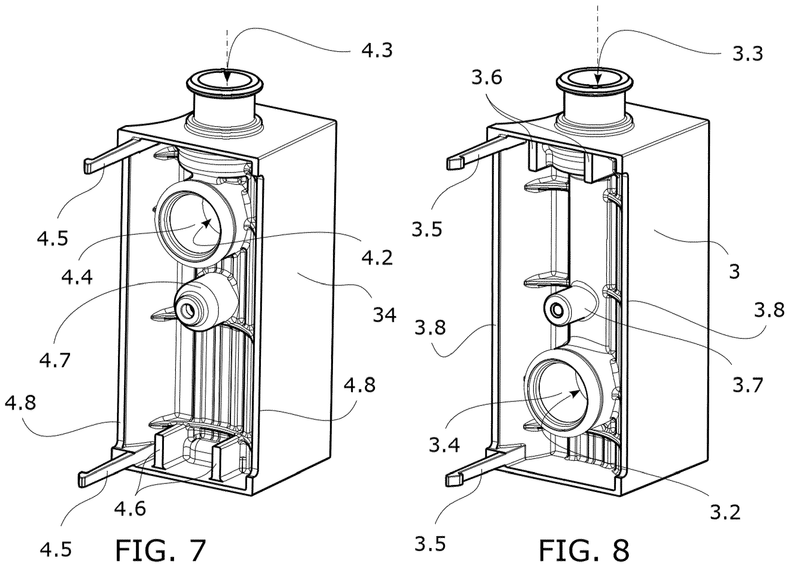

Figure 6 shows in greater detail the manner in which the fluid-tight fluidic connection is established between the two parts (3, 4) and the tube (1), where for now only each of the parts and the elements that ensure the fluid-tightness are shown, in an exploded perspective view, removing the tube (1) to have full visual access. The tube (1) and other internal elements will be added in later figures. This view is clearer individually in Figures 7 and 8 for the second part (4) and the first part (3) respectively.

The second part (4) clearly shows the internal space according to this exploded view, although the explanations are valid for the two parts. When the explanations should be different, this will be explicitly indicated.

The heat exchange fluid enters through its spigot (3.1, 4.1) and accesses through a first fluidic connection (3.3, 4.3) which, in this embodiment, has the same orientation as the spigot (3.1, 4.1). That is, the first fluidic connection (3.3, 4.3) is configured as the interface of a segment in the form of a conduit which is a prolongation of the internal conduit that defines the spigot (3.1, 4.1).

That is, the inlet or outlet direction of the fluid is imposed by the first fluidic connection (3.3, 4.3), and in this case, is maintained by the direction of the spigot (3.1, 4.1). In both cases, it is the transverse direction (Y-Y').

The heat exchange fluid, following an inlet direction, reaches an internal chamber (3.2, 4.2) which is also in fluid communication with a second fluidic connection (3.4, 4.4).

The second fluidic connection (3.4, 4.4) is what incorporates the elements necessary for establishing the fluid-tight connection with the tube (1) or with any intermediate element, in this embodiment the manifold (2), which will be described below.

This same Figure 6, and Figures 7 and 8, show that the second fluidic connections (3.4, 4.4), and therefore their corresponding internal chambers (3.2, 4.2), are located somewhere else in consideration of the transverse direction (Y-Y') since the second fluidic connection (3.4) of the first part (3) connects with the first tube bundle (1.1) and the second fluidic connection (4.4) of the second part (4) connects with the second tube bundle (1.2). Since the first tube bundle (1.1) is at a distance from the first spigot (3.1) of the first part (3) that is greater than the distance between the second tube bundle (1.2) and the spigot (4.1) of the second part (4), the second fluidic connection (3.3) of the first part is located at the end away from its spigot (3.1), in the first part (3) and according to the transverse direction (Y-Y'), and the second fluidic connection (4.3) of the second part is located at the end close to its spigot (4.1), in the second part (4) and also according to the transverse direction (Y-Y').

Going back to Figure 6 and in consideration of the parts that ensure the fluid-tightness, an O-ring (3.4.1, 4.4.1) for the connection with a rigid fitting (3.4.2, 4.4.2) which allows for minor positional deviations with the seat with which fluid-tightness must be established can be observed.

Figure 6 also shows, in detail, flat support seats (3.6, 4.6) adapted for being supported on the surface of the tube (1), ensuring the structural stability of the assembly.

The connection of the first part (3) and the second part (4) with the tube by means of the second fluidic connections (3.4, 4.4) and with the intermediation of a manifold (2) has been described up to this point. Although it will be indicated at all times that it is a manifold (2), in reality, from the functional point of view they are two manifolds, those formed by the two chambers, one for the intake flow and the other one for the return flow, but they form a single component.

Although the use of the manifold (2) is not essential, the manifold (2) allows separately defining an interface with the first channel bundle (1.1) and the second fluidic connection (3.4) of the first part (3), and an interface with the second channel bundle (1.2) and the second fluidic connection (4.4) of the second part (4).

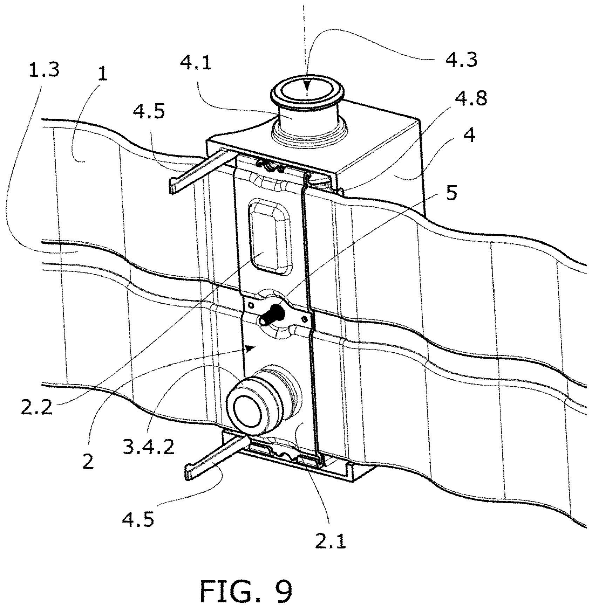

Figures 9, 10, and 11 show a sequence where some parts are progressively eliminated to allow visual access to each of the details both of the tube (1) and of the manifold (2).

According to this embodiment, the manifold (2) is formed by two stamped and punched sheets which are located on both faces of the tube (1), attached by the ends which are located at the side edges of the tube (1).

Figure 9 shows a perspective view in which the first part (3) has been removed visually, leaving only its rigid fitting (3.4.2) to enable observing how it is coupled to the manifold (2) in the lower part of the figure, the one which corresponds to the first channel bundle (1.1) of the tube (1). In this area of the manifold (2), there is a first chamber (2.1) which is in communication with the first bundle (1.1) of the segment of tube (1) extending to one side according to the longitudinal direction (X-X'), and with the first channel bundle (1.1) of the other segment of tube (1) extending to the opposite side, also according to the longitudinal direction (X-X').

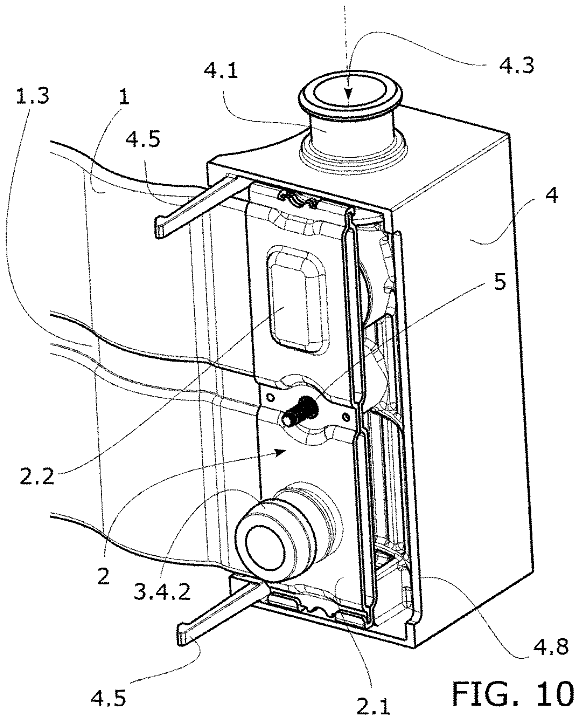

In Figure 10, this second segment of the tube (1) has been eliminated, which allows observing the interface formed by the manifold (2) as it allows the separate entry of the first channel bundle (1.1) and of the second channel bundle (1.2).

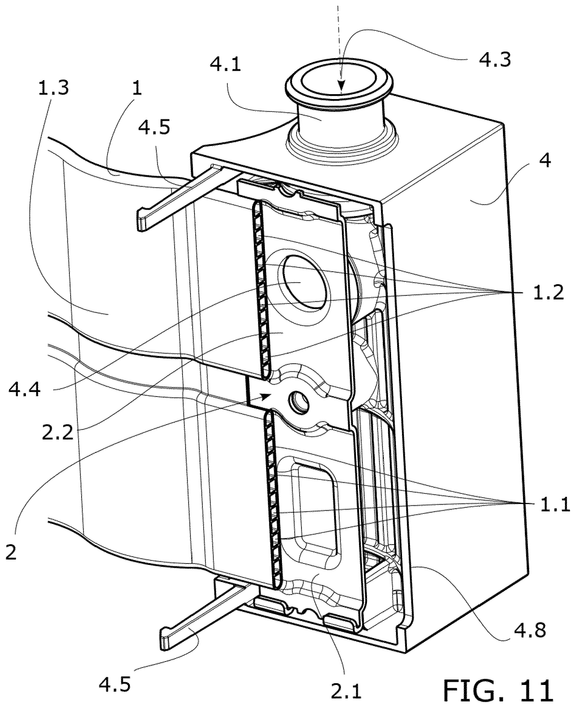

The larger volume of the first chamber (2.1) is mainly achieved by means of an expansion located on the side which is concealed in Figure 9 but which is in view in Figure 11 after having removed the front stamped sheet.

Figure 9 shows the expansion of the second chamber (2.2) of the manifold (2), the chamber which receives the return flow of the second channel bundle (1.2) to direct it through the second fluidic connection (4.4) of the second part (4) as shown in Figure 11.

Figure 11 also shows how the intermediate portion (1.3) of the tube (1) is set back according to the longitudinal direction X-X', being located outside the manifold (2). This allows the first channel bundle (1.1) and the second channel bundle (1.2) to show a termination with a continuous perimeter surface which ensures fluid-tightness, for example, with brazing.

This configuration also allows the attachments between the first channel bundle (1.1) and the second channel bundle (1.2) to establish disjunct attachment surfaces so any unwanted fluid communication between the first chamber (2.1) and the second chamber (2.2) of the manifold (2) or between the first channel bundle (1.1) and the second channel bundle (1.2) is prevented.

According to this embodiment, the two punched and stamped parts configuring the manifold (2) show a protrusion at one end and a fold at the opposite end such that it is only necessary to manufacture a single part. That is, two parts are made to coincide such that the folded end coincides with the end of the other part in the form of protrusion and vice versa.

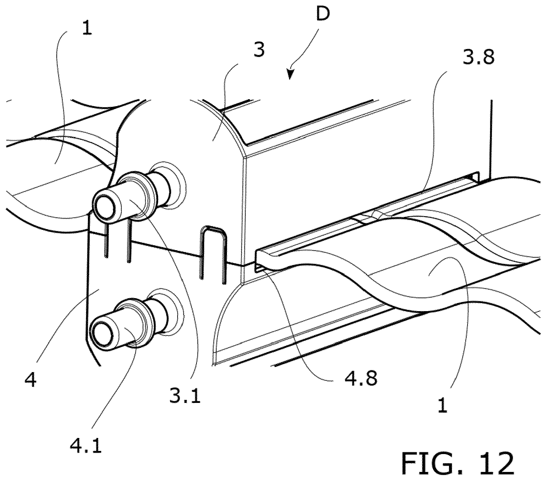

Figure 12 is a partial perspective view showing the area of the two spigots (3.1, 4.1), the attachment between the first part (3) and the second part (4), as well as the manner in which one of the branches of the tube (1) enters through the opening defined by the two notches (3.8, 4.8) of part (3) and the other part (4).

After having described a specific embodiment, with various options, and based on Figures 1 to 12, Figures 13 and 14 are schematic views and show a second and a third embodiment, respectively. Both examples lack a manifold (2).

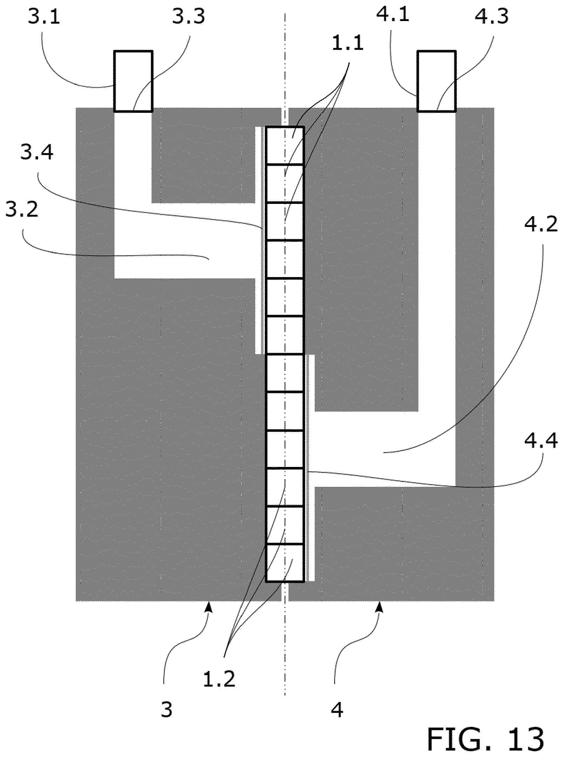

Figure 13 schematically shows the second embodiment in which the tube (1) comprises a plurality of channels, specifically 12, where half of them, i.e., 6 channels, depicted in the upper portion are the channels (1.1) for the intake flow, and the other half, i.e., 6 channels, depicted in the lower portion are the channels (1.2) for the return flow.

The first part (3) and the second part (4) are attached to one another and leave the tube (1) interposed. In the schematic depiction, the parts (3, 4) are shown separated only to allow distinguishing the first part (3) and the second part (4), although they could be in contact.

The intake flow enters through a spigot (3.1) of the first part (3) which passes into an internal chamber (3.2) through the first fluidic connection (3.3). The first fluidic connection (3.3) is depicted by a horizontal line which is the cross-section of the passage of fluid and defines an interface area between the inside of the spigot (3.1) and an internal chamber (3.2). The first channels (1.1) located in the upper portion of the tube (1) have fluidic access to the internal chamber (3.2) through an interface which in this case is depicted by a thick vertical gray line. This interface is the second fluidic connection (3.4) of the first part (3). It is a region with fluidic access from the channels (1.1) for the intake flow to the internal chamber (3.2), the access being open, for example, through grooves or perforations of each of the channels (1.1) of the upper half of the tube (1).

In this case, the interface that defines the second fluidic connection (3.4) of the first part (3) with the tube is delimited by a seat which is supported directly against the side wall of the tube (1).

The walls separating the channels from one another prevent the passage of the flow between channels and also the flow from the first part (3) to the channel bundle (1.2) for the return flow.

The grooves or perforations located in the tube (1) to establish the fluid communication through the second fluidic connection (3.4) are located on one side, on the left side in the figure.

The connection with the second part (4) is similar except that the interface which establishes the second fluidic connection (4.4) is located on the right side of the tube (1), i.e., the other side with respect to the second fluidic connection (3.4) of the first part (3), and in the lower area according to the orientation of the figure, for access to the flow of the channel bundle (1.2) conveying the return flow.

Once the return flow is collected, it accesses the internal chamber (4.2) of the second part (4) and exits through the first fluidic connection (4.3) of the first part (4) in order to come out through its spigot (4.1), for example with external connection tubes.

Given that the first part (3) and the second part (4) exert a seat against the tube (1) and establish only one interface of the second fluidic connection (3.4, 4.4) limited to openings, grooves, perforations of the tube, the fluid-tightness is ensured and an intermediate manifold is not necessary. It is the intermediate chamber (3.2, 4.2) that performs the function of a manifold.

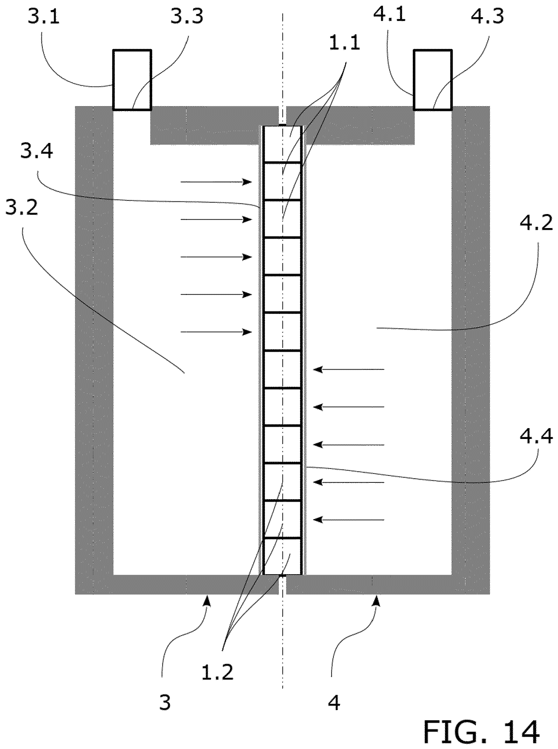

Figure 14 is an embodiment that inherits all the elements described in Figure 13, that is, the explanations of the common elements are valid, except that the internal chamber (3.2, 4.2) of the first part (3) and the second part (4) is not limited to one half of the tube (1) according to its transverse direction (Y-Y') and occupies the entire width of the tube (1).

In the case of the first part (3), the channel bundle located in the upper portion of the figure and corresponding to the channel bundle (1.1) for the intake flow only has openings on the side face towards the left side; that is, towards the internal chamber (3.2) of this first part (3) but not towards the internal chamber (4.2) of the second part (4). Hence the interface established for the second fluidic connection (3.4) of the first part (3) is depicted by means of the thick gray vertical line even though the flow is only in the upper portion where there are openings in the tube (1).

In the case of the second part (4), the channel bundle located in the lower portion of the figure and corresponding to the channel bundle (1.2) for the return flow only has openings on the side face towards the right side; that is, towards the internal chamber (4.2) of this second part (4) but not towards the internal chamber (3.2) of the first part (3). Hence the interface established for the second fluidic connection (4.4) of the second part (4) is depicted by means of the thick gray vertical line even though the flow is only in the lower portion where there are openings in the tube (1).

The flow that goes through the interface defined by the second fluidic connection (3.4, 4.4) of the first part (3) and the second part (4) is established in the region where there are arrows indicating the direction of the flow. In this embodiment, the arrows indicate that in the first part the flow enters tube (1), and in the second part (4) the arrows indicate that the flow exits the tube (1).

In this embodiment, the second fluidic connection (3.4. 4.4) is defined by the surface which is supported on the tube (1).

It should be clarified that this surface, both at the interface of the first fluidic connection (3.3, 4.3) and at the interface of the second fluidic connection (3.4, 4.4), is a surface that is not physical, but rather is the boundary of a control volume, i.e., the volume between the first fluidic connection (3.3, 4.3) and the second fluidic connection (3.4, 4.4).

## Claims

1. Fluidic connector (D) suitable for a heat exchange tube (1) for battery cells, specifically suitable for a tube (1) which:
- is adapted for transfering a thermal fluid and configured to exchange heat with one or more battery cells,
- has a flattened configuration, limited essentially between two parallel faces, in at least one segment extending essentially in a plane (P) and along a longitudinal direction (X-X') and a transverse direction (Y-Y'),
- comprises one or more longitudinal channels (1.1) for an intake flow on one of the sides thereof and one or more longitudinal channels (1.2) for a return flow on the opposite side according to the transverse direction (Y-Y'), and
- optionally, the tube (1) comprises at least one manifold (2) in fluid communication with the channels (1.1) in the intake flow, with the channels (1.2) in the return flow, or with both channels (1.1, 1.2);
wherein the fluidic connector (D) comprises a first part (3) and a second part (4) configured to, in the operating mode, leave at least part of the segment of the tube (1) having a flattened configuration interposed, wherein:
- the first part (3) and the second part (4) comprise a first fluidic connection (3.3, 4.3), the first fluidic connection (3.3) of the first part (3) for the intake flow and the first fluidic connection (4.3) of the second part (4) for the return flow;
- the first part (3) and the second part (4) comprise a second fluidic connection (3.4, 4.4) adapted for being in communication with the channels (1.1, 1.2) of the tube (1), the second fluidic connection (3.3) of the first part (3) adapted for connecting with the channels (1.1) for the intake flow of the tube (1) and the second fluidic connection (4.4) of the second part (4) adapted for connecting with the channels (1.2) for the return flow of the tube (1);
wherein the first fluidic connection (3.3) of the first part (3) is in fluid communication with its second fluidic connection (3.4), and the first fluidic connection (4.3) of the second part (4) is in fluid communication with its second fluidic connection (4.4).

2. Fluidic connector (D) according to claim 1, wherein the first fluidic connection (3.3) of the first part (3), the first fluidic connection (4.3) of the second part (4), or both first fluidic connections (3.3, 4.3) have an orientation that is not spaced from the plane (P) by more than 20°, and more preferably is not spaced from the plane (P) by more than 15°, is not spaced from the plane (P) by more than 10°, is not spaced from the plane (P) by more than 5°, is not spaced from the plane (P) by more than 3°, and more preferably is contained in the plane (P).

3. Fluidic connector (D) according to claim 1 or 2, wherein the first fluidic connection (3.3, 4.3) of the first part (3), of the second part (4), or of both is in fluid communication with the second fluidic connection (3.4, 4.4) through an internal chamber (3.2, 4.2).

4. Fluidic connector (D) according to any of the preceding claims, wherein the first part (3) and the second part (4) comprise fixing means for mutual attachment.

5. Fluidic connector (D) according to any of the preceding claims, wherein the fixing means for mutual attachment comprise clipping means (3.5, 4.5).

6. Fluidic connector (D) according to any of the preceding claims, wherein the fixing means for mutual attachment comprise screwed attachment means.

7. Fluidic connector (D) according to any of the preceding claims, wherein the first part (3), the second part (4), or both (3, 4) comprise a spigot (3.1, 4.1) in the first fluidic connection (3.3, 4.3), either fixed to the first fluidic connection (3.3, 4.3) or as a prolongation of the first fluidic connection (3.3, 4.3) forming a single body with the part (3, 4).

8. Fluidic connector (D) according to any of the preceding claims, wherein the orientation of the first fluidic connection (3.3, 4.3) is according to a transverse direction (Y-Y') with respect to the longitudinal direction (X-X'), wherein the first fluidic connections (3.3, 4.3) of the first part (3) and of the second part (4) have eitherthe same sense of orientation or the opposite sense of orientation.

9. Heat exchange device for battery cells comprising:
- a heat exchange tube (1) which:
is adapted for transfering a thermal fluid and configured to exchange heat with one or more battery cells,
has a flattened configuration, limited essentially between two parallel faces, in at least one segment extending essentially in a plane (P) and along a longitudinal direction (X-X') and a transverse direction (Y-Y'), and
comprises one or more longitudinal channels (1.1) for an intake flow on one of the sides thereof and one or more longitudinal channels (1.2) for a return flow on the opposite side according to the transverse direction (Y-Y'); and
- a fluidic connector (D) according to any of the preceding claims wherein:
the tube (1) is interposed between the first part (3) and the second part (4);
the second fluidic connection (3.4) of the first part (3) is in fluid communication with the channels (1.1) of the tube (1) intended for the intake flow, and the second fluidic connection (4.4) of the second part (4) is in fluid communication with the channels (1.2) of the tube intended for the return flow.

10. Device according to the preceding claim, wherein the first part (3) and the second part (4) are attached to one another.

11. Device according to any of claims 9 or 10, wherein the tube (1) comprises a manifold (2) with two distribution chambers (2.1, 2.2), a first distribution chamber (2.1) for the intake flow and a second distribution chamber (2.2) for the return flow, both chambers (2.1, 2.2) fluidically separated from one another:
- a first chamber (2.1) configured to be in fluid communication with the one or more intake channels (1.1), and
- a second chamber (2.2) configured to be in fluid communication with the one or more return channels (1.2);
wherein the second fluidic connection (3.4) of the first part (3) is in communication with the first distribution chamber (2.1) and the second fluidic connection (4.4) of the second part (4) is in communication with the second distribution chamber (2.2).

12. Device according to any of claims 9 to 11, wherein the connector (D) is located at an intermediate point of the tube (1) according to its longitudinal direction, such that the tube (1) extends on both sides of the connector (D) in respective segments, with both segments of the tube being in fluid connection with the connector (D).

13. Device according to any of the preceding claims, wherein the first part (3) and the second part (4) are made of a dielectric material, preferably plastic.
